# EUROPÄISCHE PATENTSCHRIFT

(11) **EP 2 828 522 B1**
(45) Veröffentlichungstag und Bekanntmachung des Hinweises auf die Patenterteilung: **10.05.2017**
(21) Anmeldenummer: 13709903.2
(22) Anmeldetag: 15.03.2013
(51) Int. Cl.: F03D 7/04, G06F 21/12

(54) **VERFAHREN ZUM KONFIGURIEREN EINER WINDENERGIEANLAGE, SOWIE WINDENERGIEANLAGE**
METHOD FOR CONFIGURING A WIND ENERGY INSTALLATION, AND WIND ENERGY INSTALLATION
PROCÉDÉ PERMETTANT DE CONFIGURER UNE ÉOLIENNE ET ÉOLIENNE

(30) Priorität: 20.03.2012 DE 102012204446
(43) Veröffentlichungstag der Anmeldung: 28.01.2015
(60) Teilanmeldung: 16174522.9
(73) Patentinhaber: Wobben Properties GmbH, 26607 Aurich (DE)
(72) Erfinder: BOHLEN, Werner, Hinrich, 26723 Emden (DE); GIERTZ, Helge, 26789 Leer (DE); SCHELLSCHMIDT, Martin, 26624 Südbrookmerland (DE)
(74) Vertreter: Eisenführ Speiser
(86) Internationale Anmeldenummer: PCT/EP2013/055353
(87) Internationale Veröffentlichungsnummer: WO 2013/139692

(56) Entgegenhaltungen:
- EP-A2- 1 783 365
- GB-A- 2 477 968
- US-A1- 2011 035 068
- US-A1- 2011 144 817

## Beschreibung

Die vorliegende Erfindung betrifft ein Verfahren zum Konfigurieren einer Windenergieanlage. Weiterhin betrifft die vorliegende Erfindung eine Windenergieanlage, die für eine solche Konfiguration vorbereitet ist. Außerdem betrifft die vorliegende Erfindung eine Windenergieanlagenanordnung mit einer Windenergieanlage und einer Steuerdatenbank.

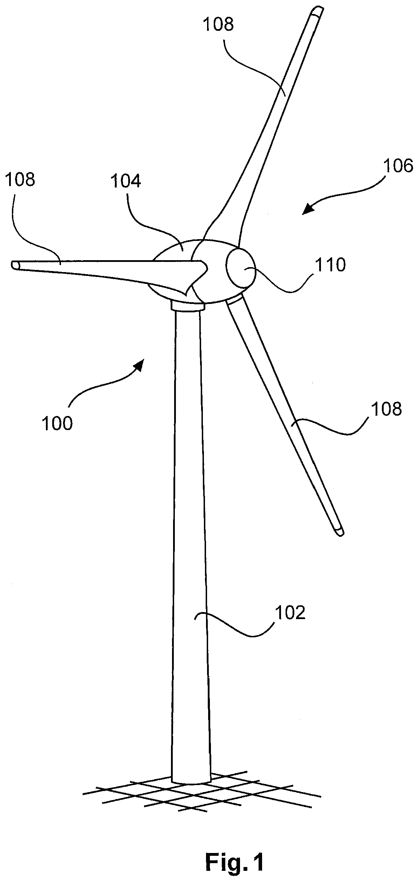

Windenergieanlagen sind allgemein bekannt und ein Beispiel einer Windenergieanlage ist schematisch in Fig. 1 gezeigt. Windenergieanlagen wandeln Energie aus dem Wind in elektrische Energie um und speisen diese in ein elektrisches Versorgungsnetz ein. Eine Windenergieanlage und der gesamte Umwandlungsprozess vom Wind bis hin zur eingespeisten elektrischen Energie sind inzwischen sehr komplex geworden. Zu seiner Ausführung können eine Vielzahl von Parametern vorgesehen sein, die teilweise individuell einzustellen sind und ggf. auch geändert werden müssen.

Mit wachsender Funktionalität der Windenergieanlage steigt auch die Anzahl der einstellbaren Parameter. Viele dieser Parameter sind auch für Verträge relevant, insbesondere Verträge, die mit dem Betreiber des elektrischen Versorgungsnetzes bestehen, in das eingespeist wird. Netztypen, nämlich Typen des Versorgungsnetzes in das eingespeist wird, Umweltbedingungen und Standortfaktoren machen eine standortabhängige Parametrierung für den optimalen Betrieb und insbesondere auch für den stabilen Betrieb der Windenergieanlage nötig und teilweise unerlässlich. Hinzu kommen Parametrierungen, die sich auf den konkreten Typ der eingesetzten Windenergieanlage beziehen. Neben solchen standortabhängigen und windenergieanlagentypabhängigen Parametern, die bspw. den konkreten Anlagentyp, die Ausgangsleistung und Turmparameter betreffen bzw. berücksichtigen, sind auch Netzparameter von besonderer Bedeutung, nämlich Parameter die das konkrete Einspeisen in das elektrische Versorgungsnetz betreffen.

All diese Parameter sind während eines Prozesses der Inbetriebnahme vom Servicepersonal per Hand an unterschiedlichen Stellen in der Windenergieanlage einzugeben, wie bspw. an einem Display eines Steuerschranks oder auch direkt auf einer Steuerplatine mit Hilfe eines entsprechenden Computers. Die Anzahl solcher während des Inbetriebnahmeprozesses einzupflegenden Parameter kann sich bspw. auf etwa 250 Parameter belaufen.

Problematisch ist insbesondere, wenn hierbei falsch eingestellte Parameter, also falsche Parameterwerte eingegeben werden. Dies kann bspw., je nach Parameter und je nach falschem Wert, sogar dazu führen, dass sich die Windenergieanlage beim Einspeisen in das Versorgungsnetz in netzkritischen Situationen nicht so verhält, wie von dem Netzbetreiber vorgesehen ist. Insbesondere kann ein Netzbetreiber, der häufig auch Energieversorger ist, Fehlerszenarien in Modellen berechnet haben, die bestimmte Verhaltensweisen der Versorger und Verbraucher am Netz berücksichtigt. Hierbei kann auch ein bestimmtes Verhalten der Windenergieanlage berücksichtigt werden und es wäre unbedingt zu vermeiden, dass sich die Windenergieanlage in einer kritischen Netzsituation anders verhält, als in den Modelberechnungen zugrundegelegt wurde. Gerade in Gebieten hoher Windenergiedichte könnte ein solches Fehlverhalten die Systemstabilität gefährden und zu extremen Netzsituationen führen, nämlich ggf. sogar zu einem unbedingt zu vermeidenden sog. Blackout.

Um solche Falschprogrammierungen zu vermeiden, wird grundsätzlich eine solche Inbetriebnahme nur von zuverlässigem Servicepersonal durchgeführt. Zusätzlich können die eingegebenen Parameter von jeweils einem zweiten Servicemitarbeiter überprüft werden. Zusätzlich sind Plausibilitätstests möglich, die insbesondere Vorzeichenfehler oder falsch gesetzte Kommata und damit Größenordnungenfehler erkennen können. Zusätzlich kann eine Simulation bzw. ein Test des jeweiligen Prozesses durchgeführt werden, für den die Parameter eingegeben wurden. Darüber hinaus können möglichst viele Parameter voreingestellt sein, dass so wenig wie möglich bei der Inbetriebnahme geändert werden muss.

Aber auch all diese Sicherheitsvorkehrungen führen letztlich nur dazu, dass das Risiko einer Fehlprogrammierung minimiert wird. Ganz ausgeschlossen werden kann es dadurch aber nicht. Es besteht somit weiterhin die Gefahr, dass falsche Parameter eingegeben werden, dessen Fehleingabe nicht oder erst zu spät erkannt wird.

Das deutsche Patent- und Markenamt hat in der Prioritätsanmeldung folgenden Stand der Technik recherchiert: DE 10 2005 049 483 A1, GB 2 384 332 A, US 2010/0135788 A1, US 2011/0166717 A1, EP 1 045 600 A1 und WO98/37661A1.

Zudem ist aus GB 2 477 968 A ein Verfahren zum Steuern einer Windenergieanlage in Abhängigkeit von verstellbaren Leistungskurven bekannt. Das Dokument EP1 783 365 offenbart ein Konfigurationsverfahren für eine Windenergieanlage, wobei Identifikationsdaten im Verfahren benutzt werden. Ferner ist aus US 2011/144817 A1 ein Verfahren zum Steuern einer Windenergieanlage in Abhängigkeit von veränderbaren Toleranzgrenzen bekannt.

Der vorliegenden Erfindung liegt somit die Aufgabe zugrunde, zumindest eins der o.g. Probleme zu adressieren. Insbesondere soll eine Lösung vorgeschlagen werden, die das Eingeben falscher Parameter ausschließt, zumindest aber das Risiko falscher Parameter minimiert, insbesondere noch weiter minimiert. Zumindest soll aber eine alternative Lösung vorgeschlagen werden.

Erfindungsgemäß wird ein Verfahren zum Konfigurieren einer Windenergieanlage gemäß Anspruch 1 vorgeschlagen.

Demnach wird ein Verfahren zum Konfigurieren einer Windenergieanlage vorgeschlagen, dass insbesondere eine Inbetriebnahme der Windenergieanlage betrifft. In diesem Fall enthält die Windenergieanlage unvollständige oder nicht angepasste Parameter, die einzustellen sind, um dadurch die Windenergieanlage zu konfigurieren. Dennoch kann die Konfiguration aber auch nochmals durchgeführt werden, wenn die Anlage bereits im Betrieb war oder im Betrieb ist, um Änderungen vorzunehmen.

Gemäß dem vorgeschlagenen Verfahren werden vorbestimmte Parameter aus einer Steuerdatenbank zum Konfigurieren der Windenergieanlage ausgewählt. Diese Parameter sind der Windenergieanlage zugeordnet, nämlich sowohl der Windenergieanlage dem Typ nach, als auch der konkreten Windenergieanlage. Diese Parameter werden somit insbesondere so ausgewählt, dass der Steuerdatenbank eine Identifikation der konkreten Windenergieanlage, insbesondere nach Typ und Aufstellungsort, mitgeteilt wird, diese Daten also angegeben werden, und zu dieser Identifikation entsprechende zugeordnete Parameter bereits in der Steuerdatenbank hinterlegt sind. Schließlich werden diese Parameter für die jeweiligen Windenergieanlagen, also insbesondere nach Typ und Aufstellungsort, von Entwicklern und Projektmitarbeitern der Windenergieanlage vorbereitet und an die konkrete Situation angepasst. Insbesondere geographische Aspekte, wie zu erwartende Winde und Luftdichten und Temperatur können berücksichtigt werden. Weiterhin können Vorgaben berücksichtigt werden, die dem Netzanschlusspunkt des Aufstellungsortes zugeordnet sind, nämlich dem Netzanschlusspunkt an dem die betreffende Windenergieanlage zum Einspeisen an das elektrische Versorgungsnetz angeschlossen werden soll.

Die so ausgewählten Parameter werden dann gemäß einer nicht beanspruchten Variante auf einem mobilen Datenträger gespeichert. Das kann bspw. eine Speicherkarte, ein USB-Stick, ein optischer Datenträger oder dergleichen sein.

Die ausgewählten Parameter werden dann von dem mobilen Datenträger auf die Windenergieanlage übertragen. Hierzu wird insbesondere der mobile Datenträger mit der Windenergieanlage entsprechend verbunden, insbesondere in eine dazu vorgesehene Aufnahme an der Windenergieanlage eingeführt oder eingesteckt. Bspw. ist die Windenergieanlage mit einem Computerterminal mit Monitor, Eingabetastatur oder dergleichen und bspw. einem Kartenlesegerät ausgestattet. Der Servicemitarbeiter kann dann an dieser Einrichtung auswählen, dass die Parameter auf dem mobilen Datenträger, der hier bspw. als Speicherkarte ausgebildet ist, auf die Windenergieanlage übertragen werden. Hierzu kann dieses Eingabeterminal sämtliche Daten von dem mobilen Datenträger übernehmen und an die entsprechenden Komponenten der Windenergieanlage verteilen. Eine andere Möglichkeit besteht darin, dass die Windenergieanlage mehrere solcher oder ähnlicher Einrichtungen zum Einspielen von Daten aufweist und entsprechend ausgewählte Daten übertragen werden. Bspw. können Parameter, die für das Einspeisen in das elektrische Versorgungsnetz relevant sind, an einem Steuerschrank eines entsprechenden zum Einspeisen vorbereiteten Wechselrichters eingegeben werden. Andere Daten können in einer Gondel der Windenergieanlage und dort auf einen Prozessrechner übertragen werden. Solche Daten können bspw. die Steuerung des Generators der Windenergieanlage betreffen oder Parameter für Einstellungen hinsichtlich eines Schutzes gegen Eisansatz betreffen, um nur einige Beispiele zu nennen.

Nachdem die Parameter in der Windenergieanlage implementiert sind, werden diese von einer mit der Windenergieanlage und der Steuerdatenbank vernetzten Überwachungseinrichtung ausgelesen. Eine solche Überwachungseinrichtung kann bspw. ein sog. SCADA sein oder SCADA einsetzen. SCADA ist auch für die Fachwelt im Bereich von Windenergieanlagen eine im deutschen Sprachraum gebräuchliche Abkürzung. Diese Abkürzung SCADA steht für "Supervisory Control And Data Acquisition". Der Begriff SCADA wird jedoch im Bereich der Windenergieanlagen eher im Sinne einer vernetzten Beobachtung von Windenergieanlagen verstanden. Grundsätzlich können auch Daten über SCADA in eine Windenergieanlage geschrieben werden. Dieser Vorgang ist jedoch unüblich. Insbesondere ist es unüblich, Windenergieanlagen online über SCADA zu steuern.

Es wird hier vorgeschlagen, die mittels des mobilen Datenträgers implementierten Parameter lediglich auszulesen. In einem weiteren Schritt werden diese ausgelesenen Parameter dann mit den vorbestimmten, der Windenergieanlage zugeordneten und in der Steuerdatenbank hinterlegten Parametern verglichen. Es ist somit vorgesehen, die Parameter von der Steuerdatenbank auf den mobilen Datenträger zu übertragen, diesen mobilen Datenträger dann zur Windenergieanlage zu bringen und dort vor Ort die gespeicherten Parameter zu übertragen und entsprechend in der Windenergieanlage zu implementieren. Bereits hierdurch werden Fehler eines individuellen Eingebens der Parameter vermieden. Zusätzlich erfolgt eine Überprüfung, ob die implementierten Parameter korrekt sind. Dieser Überprüfung wird mittels der Überwachungseinrichtung, insbesondere SCADA, durchgeführt, indem die Parameter aus der Windenergieanlage ausgelesen und mit den in der Steuerdatenbank hinterlegten Parametern verglichen werden. Sofern hier Abweichungen festgestellt werden, kann ein entsprechendes Warnsignal ausgegeben und entsprechend der Prozess des Implementierens wiederholt werden.

Es ist zu beachten, dass dieser Vorgang insbesondere beim Inbetriebnehmen der Windenergieanlage vorgenommen wird. Bei einer ersten Inbetriebnahme einer Windenergieanlage sind viele Prozesse, einschließlich Vernetzungen, evtl. noch nicht vollständig in Betrieb oder zumindest noch nicht ausreichend geprüft. Entsprechend kann auch die Vernetzung zwischen Windenergieanlage und Steuerdatenbank noch nicht, noch nicht vollständig oder noch nicht zuverlässig vorhanden sein. Ein Übertragen der zu implementierenden Parameter mittels des mobilen Datenträgers stellt somit eine sichere Lösung dar. Darüber hinaus ist auch nicht störend, dass hierzu ein Servicemitarbeiter den mobilen Datenträger zur Windenergieanlage hinbringen muss. Schließlich muss bei einer Inbetriebnahme ohnehin Servicepersonal vor Ort bei der Windenergieanlage sein.

Eine solche Übertragung mittels mobilen Datenträgers, auf den zuvor die Parameter von der Steuerdatenbank übertragen wurden, stellt jedenfalls im Vergleich zu einer manuellen Parametereingabe eine sichere Variante dar. Gleichwohl wird eine Überprüfung der so implementierten Parameter mittels einer vernetzten Überwachungseinrichtung, insbesondere vernetztem SCADA, vorgeschlagen. Bei schlechter oder noch nicht vorhandener Vernetzung kann der Abgleich später erfolgen. Die Anlage kann bereits, zumindest testweise oder abschnittsweise, in Betrieb genommen werden. Je schlechter die Vernetzung zur Windenergieanlage ist, umso höher ist die Wahrscheinlichkeit, dass die Windenergieanlage in großer Entfernung von Menschenansiedlungen aufgestellt ist und somit im Falle eines falschen Parameters zumindest eine Gefährdung von Menschen gering ist. Irgendwann ist aber mit einer Vernetzung zu rechnen, die im Übrigen kabelgebunden oder per Funk oder kombiniert vorliegen kann. Dann kann der Abgleich vorgenommen werden. Bei der beanspruchten Erfindung wird vorgeschlagen, dass die Windenergieanlage über die Vernetzung konfiguriert wird. Auch dieser Lösung liegt der Gedanke zugrunde, die zu implementierenden Parameter von der Steuerdatenbank auf die Windenergieanlage zu übertragen, anstatt sie manuell einzugeben. Entsprechend wird auch gemäß dieser Lösung vorgeschlagen, vorbestimmte der Windenergieanlage zugeordnete Parameter aus der Steuerdatenbank zum Konfigurieren der Windenergieanlage auszuwählen. Anstatt die ausgewählten Parameter auf einem mobilen Datenträger zu speichern, wird eine Datenträgerkennung auf dem mobilen Datenträger gespeichert. Diese Datenträgerkennung ist den ausgewählten Parametern und der zu konfigurierenden Windenergieanlage zugeordnet. Der mobile Datenträger wird dann mit der Windenergieanlage gekoppelt und es wird zunächst überprüft, ob die Datenträgerkennung mit der der Windenergieanlage übereinstimmt. Ist das der Fall, werden dann die ausgewählten Parameter von der Steuerdatenbank mittels der mit der Windenergieanlage und der Steuerdatenbank vernetzten Überwachungseinrichtung, also bspw. dem SCADA, auf die Windenergieanlage übertragen und die Parameter werden in der Windenergieanlage implementiert. Der mobile Datenträger fungiert hiermit zum Identifizieren, so dass ein versehentliches Übertragen von Parametern, insbesondere falschen Parametern, vermieden wird. Darüber hinaus wird hierdurch ein Sicherheitsaspekt realisiert, demnach nämlich ein Fremdzugriff, insbesondere ein sog. Hackerangriff, vermieden wird, weil ein Übertragen und Implementieren der Daten eine Identifikation an der Anlage vor Ort mittels dem mobilen Datenträger erforderlich macht.

Somit schlagen beide beschriebenen Lösungen vor, dass eine Implementierung der Parameter mit Hilfe eines mobilen Datenträgers erfolgt. In einem Fall umfasst dieser die Parameter als solche und im anderen Fall umfasst er lediglich eine Kennung, die dann über die Vernetzung zum Auswählen und Übertragen der entsprechenden Parameter verwendet werden kann.

Vorzugsweise ist jeder der Parameter durch einen individuellen Parameterschlüssel gekennzeichnet und der Parameterschlüssel umfasst die Informationen der Identifikationsparameter, die Informationen der Identifikation der Windenergieanlage, in der der Parameter verwendet wird, und/oder die Informationen der Identifikation der Person, die den implementierten Parameter zuletzt verändert hat. Durch die Identifikation des Parameters wird verhindert, dass versehentlich ein falscher Parameter übertragen wird. Das Gleiche gilt für die Identifikation der Windenergieanlage. Über die Identifikation der Person, die den implementierten Parameter zuletzt verändert hat, kann besser nachvollzogen werden, wer Änderungen vorgenommen hat. Hierdurch kann bspw. überprüft werden, ob überhaupt eine berechtigte Person den Parameter geändert hat. Sollte der Parameter nicht nachvollziehbar geändert worden sein, also insbesondere auf einen unerwünschten Wert geändert worden sein, kann mit der Person, die die Änderung vorgenommen hat, Rücksprache gehalten werden. Aus der Person, die den Parameter geändert hat, lässt sich regelmäßig auch der Anlass erkennen. Zudem führen Servicemitarbeiter regelmäßig ein Pflichtenbuch oder dergleichen, in dem die durchgeführten Tätigkeiten niedergeschrieben werden. Sollten Probleme auftreten, kann auch hier eine Überprüfung zwischen dem veränderten Parameter und dem Protokoll in diesem Pflichtenbuch vorgenommen werden.

Gemäß einer Ausführungsform umfassen die Parameter Daten zum Steuern eines Generators der Windenergieanlage, Daten zum Steuern des Einspeisens elektrischer Energie von der Windenergieanlage in ein elektrisches Versorgungsnetz, Betriebsführungsdaten und/oder Daten zum Steuern von Schutzfunktionen der Windenergieanlage. Doch ist dies keine abschließende Aufzählung. Oftmals sind mehrere Parameter notwendig, um einen solchen Zusammenhang zu erfassen. Bspw. kann ein Zusammenhang zwischen Drehzahl und Leistung des Generators hinterlegt sein.

Daten zum Steuern des Einspeisens elektrischer Energie können bspw. Vorgaben des Netzbetreibers des elektrischen Versorgungsnetzes beinhalten. Hierzu gehören bspw. Grenzwerte bei dem die Einspeisung reduziert oder unterbrochen werden muss.

Betriebsführungsdaten können bspw. die Steuerung einer Flugbefeuerung auf der Windenergieanlage betreffen oder ein Entdrillen von Leitungen, die vom Turm in die Gondel führen und aufgrund einer Azimutnachführung verdrillt wurden. Auch dies sind nur einige Beispiele.

Daten zum Steuern von Schutzfunktionen der Windenergieanlage können bspw. Sicherheitsabschaltungen betreffen.

Gemäß einer weiteren Ausführungsform wird vorgeschlagen, dass ein Änderungssignal von der Windenergieanlage an die Überwachungseinrichtung übertragen wird, wenn wenigstens ein Parameter in der Windenergieanlage geändert wurde. Ein solches Änderungssignal kann optional Informationen zum Identifizieren des wenigstens einen geänderten Parameters enthalten, nämlich insbesondere das Datum der Änderung, die Uhrzeit der Änderung und/oder die Identifikation des geänderten Parameters. Insoweit werden ergänzende Schritte vorgeschlagen, für den Fall, dass eine Implementierung sämtlicher Parameter bei Erstinbetriebnahme im Wesentlichen abgeschlossen ist. Entweder können später Parameter geändert werden oder es hat sich herausgestellt, dass bei der Inbetriebnahme noch ein Parameter angepasst werden muss.

Vorzugsweise erfolgt ein Abgleich zwischen Parametern der Windenergieanlage und in der Steuerdatenbank hinterlegter Parameter nur für die geänderten Parameter, also für die Parameter, die durch das Änderungssignal identifiziert wurden. Eine solche Teilüberprüfung wird insbesondere vorgeschlagen, wenn nur ein Parameter oder wenige Parameter geändert wurden. Werden sehr viele Parameter geändert, also bspw. wenigstens 10 Parameter oder wenigstens 20 Parameter, so kann es sinnvoll sein, den gesamten Parametersatz abzugleichen. Vorzugsweise erfolgt der Vergleich der ausgelesenen Parameter mit den vorbestimmten, der Windenergieanlage zugeordneten und in der Steuerdatenbank hinterlegten Parametern parameterweise. Es wird also ein implementierter Parameter nach dem anderen ausgelesen und mit dem zugehörigen in der Steuerdatenbank hinterlegten verglichen. Dies hat insbesondere den Vorteil, dass im Falle einer schwachen Vernetzung, die insbesondere auch nur eine langsame oder sporadische Datenübertragung ermöglicht, schrittweise dennoch ein Abgleich vorbenommen werden kann. Ebenso wird für den Fall, dass die Parameter unmittelbar von der Steuerdatenbank mittels der vernetzten Überwachungseinrichtung in die Windenergieanlage übertragen werden, auch diese Übertragung parameterweise durchgeführt. So kann ein Parameter nach dem anderen übertragen und implementiert werden. Vorzugsweise erfolgt auch hierfür eine Überprüfung des übertragenen und implementierten Parameters, um auch ein Übertragungsfehler ausschließen zu können.

Gemäß einer Ausgestaltung wird vorgeschlagen, dass die ausgewählten Parameter in einem Parametersatz mit einem der Windenergieanlage zugeordneten Identifikationscode zusammengefasst sind, oder dass sie einem solchen Identifikationscode zugeordnet sind. Voreilhaft ist, wenn ein solcher Identifikationscode sich zusammensetzt aus wenigstens einem den Anlagentyp der Windenergieanlage kennzeichnenden Typencode und einem die konkrete Windenergieanlage kennzeichnenden Individualcode. Somit kann eine erste Identifikation und damit auch Klassifizierung für einen Anlagentyp vorgenommen werden, wie bspw. eine Windenergieanlage vom Typ E82 des Unternehmens Enercon, um nur ein Beispiel zu nennen. Viele Parameter, die einer solchen Windenergieanlage dem Typ nach zugeordnet sind, sind ähnlich oder identisch. Weiterhin kann es aber zumindest für einige Parameter darauf ankommen, wo die konkrete Windenergieanlage aufgestellt ist. Bspw. können zwei typgleiche Windenergieanlagen aber an unterschiedlichen Netzanschlusspunkten angeschlossen sein. Gelten unterschiedliche Vorschriften für diese beiden Netzanschlusspunkte, müssen diese typgleichen Windenergieanlagen dennoch unterschiedlich konfiguriert werden. Hierfür wird die Verwendung des die konkrete Windenergieanlage kennzeichnenden Individualcodes vorgeschlagen.

Auf solche Parameter kann bspw. auch seitens einer Entwicklungsabteilung zugegriffen werden. Die Entwicklungsabteilung kann bspw. für Parameter eines Anlagentyps Änderungen vornehmen und diese für denselben Anlagentyp oder eine konkrete Windenergieanlage neu abspeichern und mit dem entsprechenden geänderten Individualcode versehen. Beim Auswählen der vorbestimmten, der Windenergieanlage zugeordneten Parameter kann die Identifikation der notwendigen Parameter über diesen zusammengesetzten Code erfolgen.

Vorzugsweise werden beim Implementieren der Parameter in der Windenergieanlage nur einige der in dem Datensatz zusammengefassten Parameter implementiert. Dies kann insbesondere bei späteren Änderungen vorteilhaft sein. Bspw. können bestimmte Parameter eines Anlagentyps aufgrund einer firmenseitigen Verbesserung geändert werden. Solche Änderungen können dann für die Parameter jeder Anlage dieses Typs zutreffend sein. Über den Typencode können alle diese Parameter identifiziert und geändert werden. Entsprechend wird dann nur ein Austausch dieser Parameter vorgenommen.

Vorzugsweise wird vorgeschlagen, dass die Windenergieanlage erst in Betrieb genommen wird, wenn die in der Windenergieanlage implementierten oder geänderten Parameter mit den vorbestimmten, der Windenergieanlage zugeordneten und in der Steuerdatenbank hinterlegten Parametern verglichen wurden. Insbesondere bei der Erstinbetriebnahme, aber auch bei späteren Änderungen, erfolgt vorzugsweise ein Übertragen der Parameter auf die Windenergieanlage, woraufhin eine Überprüfung, also ein Abgleich, mit den in der Steuerdatenbank hinterlegten Parametern über die vernetzte Überwachungseinrichtung abgewartet wird. Nach diesem Abgleich kann dann ein Freigabesignal oder ein anderes Signal bereitgestellt werden, das dem Servicemitarbeiter mitteilt, dass die neu implementierten Parameter korrekt sind. Sind sie nicht korrekt, wird eine entsprechende Warnung oder ein entsprechender Hinweis ausgegeben. Dieser Hinweis kann generell eine Warnung sein, dass ein Fehler vorliegt und/oder konkrete Parameter identifizieren, bei dem ein Fehler aufgetreten ist. Die Anlage wird dann nicht in Betrieb genommen und entsprechend kann hierdurch ein Fehler, insbesondere auch ein Unfall oder ein Havariefall, vermieden werden.

Weiterhin wird eine Windenergieanlage zum Erzeugen elektrischer Energie aus Wind vorgeschlagen, die dazu vorbereit ist mittels eines Verfahrens der oben beschriebenen Optionen bzw. Ausführungsformen konfiguriert zu werden. Insbesondere weist eine solche Windenergieanlage entsprechende Einrichtungen auf, um den mobilen Datenträger auslesen zu können. Weiterhin ist die Windenergieanlage entsprechend mit der Überwachungseinrichtung vernetzt. Auch ist entsprechende Software vorgesehen, die das Implementieren und/oder Abgleichen ermöglicht.

Weiterhin wird eine Windenergieanlagenanordnung vorgeschlagen, die neben einer Windenergieanlage auch eine Steuerdatenbank und eine mit der Steuerdatenbank vernetzte Überwachungseinrichtung umfasst. Eine solche Windenergieanlagenanordnung ist dazu vorbereitet, durch ein Verfahren gemäß einem der oben beschriebenen Optionen oder Ausführungsformen konfiguriert zu werden. Demnach wird also nicht nur eine Windenergieanlage bzw. mehrere Windenergieanlagen vorgeschlagen, sondern zusätzlich das Vorsehen einer entsprechenden Datenbank und einer vernetzten Überwachungseinrichtung.

Nachfolgend wird die Erfindung anhand von Ausführungsformen beispielhaft unter Bezugnahme auf die begleitenden Figuren näher erläutert.
- Fig. 1: zeigt schematisch eine Windenergieanlage in einer perspektivischen Ansicht.
- Fig. 2: zeigt ein Diagramm zur Veranschaulichung der Vernetzung einer Windenergieanlagenvorrichtung.
- Fig. 3: zeigt ein Diagramm zur Veranschaulichung der Verarbeitung von Parametern und anderen Daten in einer Windenergieanlagenanordnung.
- Fig. 4: zeigt ein Diagramm zur Veranschaulichung des Ablaufes eines Parameterabgleichs in einer Windenergieanlage oder einem Windpark mit mehreren Windenergieanlagen.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

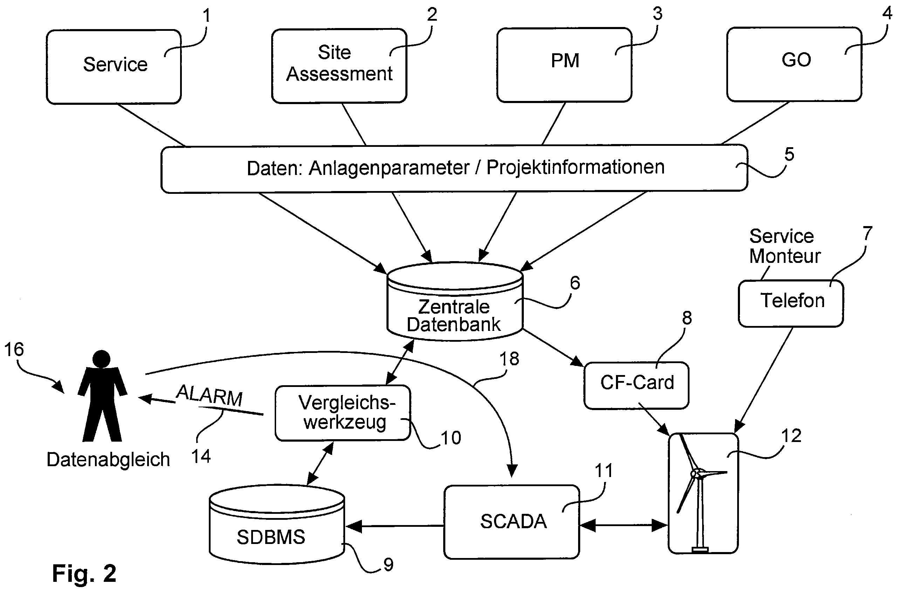

Das Diagramm der Fig. 2 veranschaulicht, dass Vorgabedaten, sogenannte Solldaten einschließlich vorbestimmter Parameter in einer zentralen Datenbank 6 hinterlegt sind. Die zentrale Datenbank 6 kann als sog. SAP 6 ausgebildet sein. In der zentralen Datenbank 6 sind insbesondere Anlagenparameter und Projektinformationen gespeichert. Diese Daten werden zum Steuern der Windenergieanlage zumindest teilweise benötigt und die zentrale Datenbank 6 wird daher auch als Steuerdatenbank 6 bezeichnet.

Auf die Steuerdatenbank kann der Service 1, das Site Assessment 2, die Abteilung PM 3 und die Abteilung GO 4 zugreifen was durch den Datenkommunikationsblock 5 veranschaulicht wird. Der Zugriff betrifft das Lesen oder Schreiben von Daten, wie Anlagenparametern und Projektinformationen.

Das Site Assessment 2 bezeichnet eine Standortbegutachtung eines geplanten Standortes einer Windenergieanlage. Das kann die Beurteilung der vorherrschenden Wind- und Wetterverhältnisse, vorliegende Netzbedingungen und lokale Vorschriften beinhalten, um nur einige Beispiele zu nennen.

Die PM 3 bezeichnet ein Projektmanagement, das sich um projektspezifische Umsetzung und Durchführung von Installations- und Einrichtungsarbeiten beim Aufbau einer neuen Windenergieanlage bzw. eines neuen Windparks kümmert. Die Abteilung GO 4 betrifft die Planung, Durchführung und Überwachung des Anschlusses einer Windenergieanlage bzw. eines Windparks an ein elektrisches Versorgungsnetz.

Um die Windenergieanlage 12 zu konfigurieren werden die entsprechenden Parameter auf einen mobilen Datenträger 8 geschrieben bzw. gespeichert und mit dem so vorbereiteten Datenträger 8 auf die Windenergieanlage 12 übertragen. Ein Servicemitarbeiter bringt hierfür den beschriebenen mobilen Datenträger 8 zur Windenergieanlage 12. Der mobile Datenträger ist hier als Speicherkarte, insbesondere als sog. CF-Card, vorgesehen. Eine CF-Card ist eine Speicherkarte, die einen Schnittstellenstandard verwendet, der auch im deutschen Sprachgebrauch als CompactFlash bezeichnet wird.

Weitere Möglichkeiten des Zugriffs, möglicherweise mit Beschränkung, bestehen für den Service oder einen Monteur auch über ein Telefon 7. Um zu überprüfen, ob die in der Windenergieanlage 12 implementierten Parameter korrekt sind, kann ein Abgleich mit den Daten der Steuerdatenbank 6 erfolgen. Hierzu ist eine Vernetzung vorgesehen, die ein SCADA-System 11 verwendet. Über den SDBMS-Block 9 erfolgt dann mit Hilfe eines Vergleichswerkzeugs 10 ein Abgleich der in der Windenergieanlage 12 gespeicherten und implementierten Parameter.

Die Abkürzung SDBMS des Blocks 9 steht für SCADA-Database-Management-System und ist ein Datenbanksteuersystem des SCADA-Systems. Der Block 9 hat somit die Aufgabe, Ist-Werte der betreffenden Windenergieanlage zu speichern um sie zum Vergleich mit den Soll-Werten der zentralen Datenbank bereitzustellen. Das Vergleichswerkzeugt stellt eine Kommunikation zur Steuerdatenbank 6 her. Gleichzeitig kann das Vergleichswerkzeug 10 einen Auftrag oder Alarm 14 an einen Servicemitarbeiter 16 übersenden, der mit dem Datenabgleich beschäftigt ist.

Über das SCADA-System 11, das auch eine Kommunikation mit der Windenergieanlage 12 ermöglicht, kann der Servicemitarbeiter 16 auch einen manuellen Abgleich vornehmen. Ein solcher manueller Abgleich ist insbesondere bei einer Veränderung einzelner Parameter möglich. Hierzu ist veranschaulichend der Kommunikationspfeil 18 für manuellen Abgleich zur Veranschaulichung eingezeichnet.

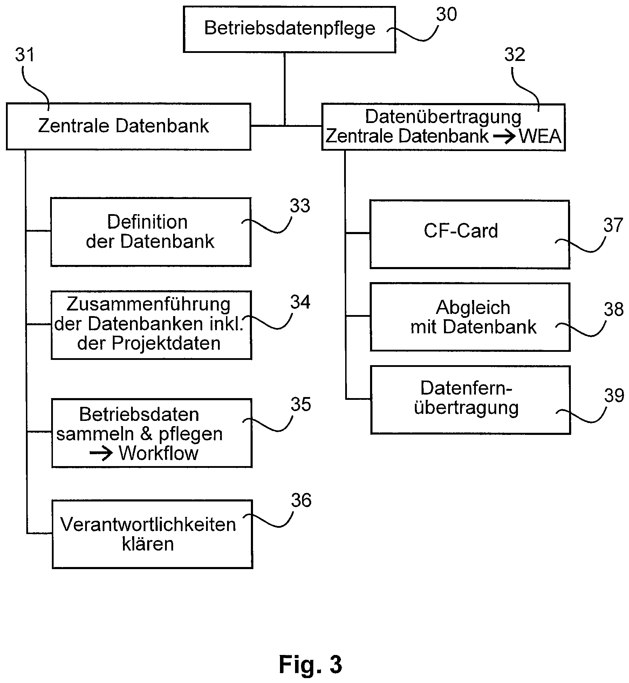

Fig. 3 veranschaulicht eine Übersicht der Herkunft und Verwendung notwendiger Parameter der Windenergieanlage. Dem übergeordnet ist eine Betriebsdatenpflege, die mit dem Block 30 gekennzeichnet bzw. veranschaulicht ist. Auch die weiteren Blöcke dienen primär der Veranschaulichung der Zusammenhänge. Wichtig für die Parameter ist zum Einen die Steuerdatenbank, die in Fig. 3 als zentrale Datenbank 31 gekennzeichnet ist, und der Vorgang der Datenübertragung von der Steuerdatenbank zur Windenergieanlage, was Datenübertragungsblock zentrale Datenbank -> WEA 32 veranschaulicht.

Der Vollständigkeit halber wird erläutert, dass zur zentralen Datenbank 31 ein Block 33 zur Definition der Datenbank gehört, sowie ein Block 34 zur Zusammenführung der Datenbanken einschließlich der Projektdaten. Ein Block 35 ist repräsentativ für einen Arbeitsablauf, der auch als Workflow bezeichnet, der das Sammeln und Pflegen von Betriebsdaten betrifft. Das Klären von Verantwortlichkeiten wird durch den Block 36 veranschaulicht und ist unter dem Gesamtkomplex der Steuerdatenbank zusammengefasst.

Als ein Element der Datenübertragung von der Steuerdatenbank zur Windenergieanlage gemäß Block 32 ist der Speicherkartenblock 37 angegeben. Dieser soll insbesondere den Vorgang des Datenübertragens von der Speicherkarte 8 auf die Windenergieanlage 12 gemäß Fig. 2 als Teil der Datenübertragung gemäß Block 32 veranschaulichen. Der Abgleichblock 38 veranschaulicht den Vorgang des Abgleichs mit der Datenbank bzw. des Abgleichs mit der Steuerdatenbank. Er bezieht sich insbesondere auf die Vorgänge, die zu Fig. 2 im Zusammenhang mit dem SDBMS-Block 9 und dem Vergleichswerkzeug 10 beschrieben wurden. Ein weiterer wichtiger Punkt ist eine Datenfernübertragung, für die repräsentativ der Datenfernübertragungsblock 39 eingezeichnet ist. Der Datenfernübertragungsblock 39 veranschaulicht den Vorgang der Datenfernübertragung und nimmt dabei Bezug auf die Beschreibung zum SCADA-Block 11 der Fig. 2.

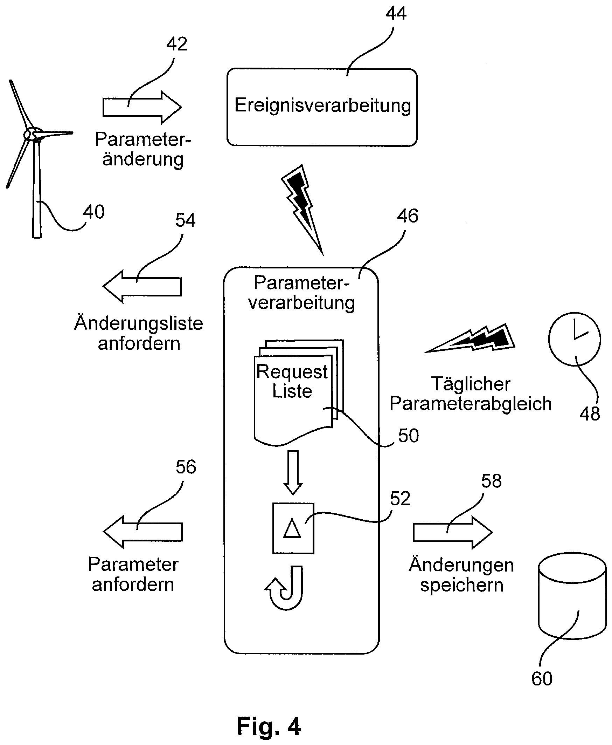

Fig. 4 veranschaulicht etwas detaillierter Vorgänge des Parameterabgleichs unter Zuhilfenahme von SCADA. Zunächst wird von einer Windenergieanlage 40 ausgegangen, die in eine Parameteränderungsmeldung 42 an eine Ereignisverarbeitung 44 abgibt. Diese Ereignisverarbeitung 44 verarbeitet die Meldung 42 über die Parameteränderung und hat damit Auswirkungen auf die Parameterverarbeitung im Parameterverarbeitungsblock 46. Außerdem bzw. als Alternative wirkt sich eine zeitliche Steuerung, insbesondere zeitliche Triggerung, eines Parameterabgleichs gemäß der Zeitsteuerung 48 aus.

In dem Parameterverarbeitungsblock 46 wird dann eine Anforderungsliste 50 erstellt. Diese wird an einen Abarbeitungsblock 52 gegeben, der weitere Schritte koordiniert bzw. für weitere Schritte eine Basis bildet. Insbesondere abhängig davon ergeht eine Änderungslistenanforderung 54 und eine Parameteranforderung 56. Hierdurch wird der Abgleich der Parameter in der Windenergieanlage mit Parameter in der Steuerdatenbank ausgelöst. Entsprechend, was in dem Schema der Fig. 4 nicht dargestellt ist, werden diese Anforderungen erfüllt und die Parameter und/oder Änderungslisten zum Abgleich zur Verfügung gestellt. Dabei kann ein Abgleich über eine Änderungsliste erfolgen oder ein Abgleich parameterweise erfolgen. Oder beide Arten des Abgleichs können sich ergänzen oder gleichzeitig ausgeführt werden. Weiterhin werden die durchgeführten Änderungen gemäß einem Änderungsspeicherbefehl 58 in einem Speicher 60 gespeichert.

Somit wird in einem SCADA-Serversystem ein Prozess implementiert, der die Überwachung der Parameter übernimmt. Der Abgleich zwischen dem Windpark SCADA-System und der einzelnen Anlage, kann auf zwei unterschiedliche Methoden erfolgen, die auch beide ausgeführt werden können. Zunächst wird davon ausgegangen, dass ein Windpark SCADA-System, also ein System das eine Windparkvernetzung ermöglicht und durchführt, vorliegt. Dies kann bedeuten, dass ein Windpark mit einem solchen System vorliegt oder dass nur ein solches System verwendet wird, insbesondere um eine Datenfernübertragung zugeschnitten auf eine oder mehrere Windenergieanlagen zu realisieren.

Der Abgleich kann somit einerseits zeitlich erfolgen, was durch die Zeitsteuerung 48 veranschaulicht wird. Hierbei erfolgt der Abgleich bspw. einmal pro Tag. Änderungen, die dazwischen aufgetreten sind, also insbesondere innerhalb des letzten Tages aufgetreten, werden dabei erfasst und überprüft.

Die andere Methode, die wie gesagt auch ergänzend eingesetzt werden kann, arbeitet ergebnisgesteuert. Dabei signalisiert die Windenergieanlage dem Windpark SCADA-System mittels einer Ereignisverarbeitung, die Block 44 symbolisiert, dass sich ein Parameter oder mehrere Parameter geändert haben. Daraufhin werden die Parameterschlüssel der geänderten Parameter sowie eine Zeitidentifikation, die auch Zeitstempel genannt werden kann, der letzten Änderung vom SCADA-System angefordert. Abschließend werden dann die geänderten Parameter, also geänderten Anlagenparameter, mit einer entsprechend zugehörigen Benutzernummer des betreffenden Servicetechnikers von dem Windpark SCADA-System ausgelesen. Damit kann der Abgleich durchgeführt und beendet werden.

Es wird somit eine Lösung vorgeschlagen, die eine Qualitätssicherung für Windenergieanlagen erreichen soll. Anzustrebendes Ziel ist, dass jede Windenergieanlage, auf die die vorgeschlagene Lösung angewendet wird, mit korrekten Parametern betrieben wird. Das soll sichergestellt werden.

Betriebsparameter werden hierbei zentral in eine Steuerdatenbank, insbesondere in das zentrale Datenbank-System des Windenergieanlagenherstellers eingepflegt und darin verwaltet. Das zentrale Datenbank-System kann auch synonym als zentrale Datenbank bezeichnet werden. Durch ein gesichertes Exportierten der Parameter einer Windenergieanlage, also die Parameter die für eine bestimmte Windenergieanlage vorgesehen sind, auf eine CF-Speichercard, können diese auf die jeweilige Windenergieanlage übertragen werden, was auch als eingespielt bezeichnet wird.

Um Abweichungen der Parameter zwischen der Windenergieanlage und dem zentralen Datenbank-System zu erkennen, werden von den installierten SCADA-Systemen in den Windparks die individuellen Anlagenparameter erfasst. Einmal täglich oder nach Auftreten eines Ereignisses werden dann die Parameter zentral mit denen im zentralen Datenbank-System gespeicherten Parametern abgeglichen. Bei Abweichungen wird dann eine Information an den Service weitergleitet.

Ein wichtiger Aspekt ist eine eindeutige Identifikation der Parameter. Hierfür ist eine eindeutige Parameternummer vorgesehen, die auch als Parameterkey bezeichnet wird. Diese Nummer ist in der Windenergieanlage, die auch vereinfachend als Anlage bezeichnet wird, bekannt und sie ist im SCADA-System und im zentralen Datenbank-System bekannt und definiert anhand einer Parameterbeschreibung den Parameterwert. Die Parameterbeschreibung beinhaltet dabei Werte der Charakterisierung des Parameters, als auch seinen Inhalt. Die Parameterbeschreibung kann einen, mehrere oder alle der folgenden Elemente enthalten. Vorzugsweise beinhaltet sie alle der folgenden Elemente:
- Parameterkey, der ein eindeutiger Schlüssel zum Identifizieren des Parameters ist.
- Eine gültige Anlagenkennung, die identifiziert, welcher Anlage der Parameter zugeordnet ist.
- Ein Kurzname des Parameters.
- Eine Parameterbeschreibung, die vorzugsweise zweisprachig ausgeführt ist, nämlich in Deutsch und Englisch.
- Die Angabe des Datentyps, nämlich ob eine sog. longer INTEGER oder ein sog. langes WORD verwendet wird, wobei ein WORD doppelt so lang ist wie ein INTEGER.
- Eine Werteskalierung und/oder ein Werteoffset.
- Ein minimaler Wert und ein maximaler Wert.
- Der Darstellungstyp des Parameterwertes, nämlich ob dieser dezimal, hexadezimal, binär oder ähnlich ausgebildet ist. Dazu oder dafür kann ein Darstellungsschlüssel vorgesehen sein.
- Eine Einheit, insbesondere eine physikalische Einheit.
- Ein sog. Default Wert, also ein Wert, der standardmäßig enthalten ist, bevor ein tatsächlich individualisierter Wert eingetragen wird.
- Ein Parameter, der Rechte zum Lesen und Schreiben vergibt und im gesamten System Gültigkeit besitzt.
- Ein Level für Leserechte, der angibt, wer Leserechte hat.
- Ein Level für Schreibrechte, der angibt, wer Schreibrechte hat.
- Eine Parameterabkündigung, die nämlich Parameter als Platzhalter reserviert.

Das Auslesen der Parameter einer Windenergieanlage erfolgt gesteuert durch das SCADA-System. Jeder Parameter wird hierbei einzeln durch die Angabe des eindeutigen Parameterkeys von der Windenergieanlage angefordert. Die Windenergieanlage antwortet mit einem Dateninhalt, der den Parameterkey, einen Wert und eine Benutzernummer, die den Benutzer identifiziert, der den Parameter geändert hat, enthält. Wird ein Parameter angefordert, der in der Windenergieanlage nicht existiert, antwortet die Windenergieanlage mit einem Parameterkey, der den Inhalt "Error" aufweist und mit einem Fehlerkode, der dort eingetragen ist, wo ansonsten der Wert des Parameters eingetragen wäre.

Die Windenergieanlage kann über einen Statusdatensatz dem SCADA-System eine Änderung von Parametern signalisieren, wie dies durch die Parameteränderungsmeldung 42 und den Ereignisverarbeitungsblock 44 der Fig. 4 veranschaulicht ist. Die Parameterkeys der geänderten Parameter können dann durch einen weiteren Datensatz von den Anlagen ausgelesen werden, der folgendes Aussehen hat:
- Datum der letzten Parameteränderung.
- Uhrzeit der letzten Parameteränderung.
- Anzahl der Parameterkeys, die sich seit der letzten Abfrage geändert haben.

Haben sich mehrere Parameter geändert, als hierüber mitgeteilt werden können, kann auch durch das Setzen eines entsprechenden Parameterkeys eine Aufforderung für den Abgleich aller Parameter der Anlage erfolgen.

Durch das Datum und die Uhrzeit der letzten Parameteränderung einer Windenergieanlage kann die zeitliche Parameteranforderung so optimiert werden, dass nur Windenergieanlagen, deren Zeitstempel sich zudem im SCADA-System gespeicherte Zeitstempel unterscheidet, angefordert werden. Wird also täglich ein Zeitabgleich initiiert, wird an dem jeweils aktuellen Tag nur Zeitabgleich für die Windenergieanlagen vorgenommen, die nicht schon auf andere Art und Weise an diesem Tag abgeglichen wurden.

Vorzugsweise wird eine fest vorgegebene Parameterorganisation verwendet, die in der Steuerdatenbank und auch in der vernetzten Überwachungseinrichtung, insbesondere im SCADA-System verwendet wird. Hierbei werden vorzugsweise Parameter anlagenkennungsorientiert verwaltet. Jeder Anlagentyp wird separat verwaltet. Hierfür wird eine Definition zugrundegelegt, die über Konfigurationsdateien verwirklicht wird, in denen die jeweiligen Parameter des Anlagentyps definiert sind.

Jeder Parameter einer Anlage wird hierbei mit seinem Änderungsstand verwaltet. Dieser Änderungsstand beinhaltet insbesondere den aktuellen Parameterwert, Datum und Uhrzeit der Änderung, die Benutzernummer des Benutzers der die Änderung vorgenommen hat, und ggf. einen Fehlerwert oder eine Fehlerkennung. Vorzugsweise wird eine Datenbankdatei des aktuellen Parameterzustandes je Anlagentyp der Windenergieanlagen geführt und eine Datenbankdatei, die nur die Änderungen aller Anlagen beinhaltet. Für jeden Anlagentyp sind somit zwei Datenbankdateien vorgesehen und die Datenfeldbeschreibungen dieser Datenbankdateien sind vorzugsweise identisch aufgebaut. Sie beinhalten Datum und Uhrzeit der letzen Änderung, die konkrete Anlagennummer, den Anlagentyp, der allerdings nur in der Änderungsdatei gespeichert ist, einen Fehlercode, der ein Zahlenwert aus drei Zeichen sein kann, einen Parameterschlüssel, der ein Ganzzahlenwert mit fünf Zeichen sein kann, einen Parameter, also Parameterwert, der als Doppeltwert mit 10 Zeichen und zwei Nachkommastellen aufgebaut sein kann, und den Anwender der letzten Parameteränderung, für den ein String mit 20 Zeichen vorgesehen sein kann, also ein Datenfeld, das im Grunde beliebige Zeichen, insbesondere Zahlen und Buchstaben, aufnehmen kann.

## Patentansprüche

1. Verfahren zum Konfigurieren einer Windenergieanlage, umfassend die Schritte
- Auswählen vorbestimmter, der Windenergieanlage zugeordneter Parameter aus einer Steuerdatenbank (6) zum Konfigurieren der Windenergieanlage,
- Speichern einer den ausgewählten Parametern und der zu konfigurierenden Windenergieanlage zugeordneten Datenträgerkennung auf einem mobilen Datenträger (8),
- Koppeln des mobilen Datenträgers (8) mit der Windenergieanlage und Überprüfen, ob die Datenträgerkennung mit der der Windenergieanlage übereinstimmt,
- Übertragen der ausgewählten Parameter von der Steuerdatenbank (6) mittels einer mit der Windenergieanlage und der Steuerdatenbank (6) vernetzten Überwachungseinrichtung (11) auf die Windenergieanlage und Implementieren der ausgewählten Parameter in der Windenergieanlage, wenn die Datenträgerkennung mit der der Windenergieanlage übereinstimmt.

2. Verfahren nach Anspruch 1 ,
**dadurch gekennzeichnet, dass**
jeder Parameter durch einen individuellen Parameterschlüssel gekennzeichnet ist und der Parameterschlüssel umfasst wenigstens eine der Informationen
- Identifikation des Parameters,
- Identifikation der Windenergieanlage, in der er verwendet wird und
- Identifikation der Person, die den implementierten Parameter zuletzt verändert hat.

3. Verfahren nach Anspruch 1 oder 2,
**dadurch gekennzeichnet, dass**
die Parameter umfassen:
- Daten zum Steuern eines Generators der Windenergieanlage,
- Daten zum Steuern des Einspeisens elektrischer Energie von der Windenergieanlage in ein elektrisches Versorgungsnetz,
- Betriebsführungsdaten und/oder
- Daten zum Steuern von Schutzfunktionen der Windenergieanlage.

4. Verfahren nach einem der vorstehenden Ansprüche,
**dadurch gekennzeichnet dass**
ein Änderungssignal von der Windenergieanlage an die Überwachungseinrichtung (11) übertragen wird, wenn wenigstens ein Parameter in der Windenergieanlage geändert wurde, wobei das Änderungssignal optional Informationen zum Identifizieren des wenigstens einen geänderten Parameters enthält und diese Informationen umfassen:
- Datum der Änderung,
- Uhrzeit der Änderung und/oder
- Identifikation des geänderten Parameters.

5. Verfahren nach Anspruch 4,
**dadurch gekennzeichnet, dass**
nur die geänderten, durch das Änderungssignal identifizierten Parameter mit den vorbestimmten, der Windenergieanlage zugeordneten und in der Steuerdatenbank (6) hinterlegten Parametern verglichen werden oder dass alle implementierten Parameter verglichen werden, wenn die Anzahl der geänderten Parameter eine vorbestimmte Mindestzahl überschreitet.

6. Verfahren nach einem der vorstehenden Ansprüche,
**dadurch gekennzeichnet, dass**
das Vergleichen der ausgelesenen Parameter mit den vorbestimmten, der Windenergieanlage zugeordneten und in der Steuerdatenbank (6) hinterlegten Parametern parameterweise erfolgt, indem jeder implementierte Parameter einzeln aus der Windenergieanlage ausgelesen und mit dem in der Steuerdatenbank (6) hinterlegten, korrespondierenden Parameter verglichen wird.

7. Verfahren nach einem der vorstehenden Ansprüche,
**dadurch gekennzeichnet, dass**
die ausgewählten Parameter in einem Parametersatz mit einem der Windenergieanlage zugeordneten Identifikationscode zusammengefasst oder einem solchen zugeordnet sind und insbesondere der Identifikationscode sich zusammensetzt aus wenigstens
- einem den Anlagentyp der Windenergieanlage kennzeichneten Typencode und
- einem die konkrete Windenergieanlage kennzeichnenden Individualcode.

8. Verfahren nach Anspruch 7,
**dadurch gekennzeichnet, dass**
beim Implementieren der Parameter in der Windenergieanlage nur einige der in dem Datensatz zusammengefassten Parameter Implementiert werden.

9. Verfahren nach einem der vorstehenden Ansprüche,
**dadurch gekennzeichnet, dass**
die Windenergieanlage erst in Betrieb genommen wird, wenn die in der Windenergieanlage implementierten oder geänderten Parameter mit den vorbestimmten, der Windenergieanlage zugeordneten und in der Steuerdatenbank (6) hinterlegten Parametern verglichen wurden.

10. Windenergieanlage zum Erzeugen elektrischer Energie aus Wind, dazu vorbereitet, mittels eines Verfahrens nach einem der vorstehenden Ansprüche konfiguriert zu werden.

11. Windenergieanlagenanordnung umfassend
- eine Windenergieanlage,
- eine Steuerdatenbank (6) und
- eine mit der Steuerdatenbank (6) vernetzte Überwachungseinrichtung (11),
wobei die Windenergieanlage dazu vorbereitet ist, durch ein Verfahren nach einem der Ansprüche 1 bis 9 konfiguriert zu werden.

## Claims

1. Method for configuring a wind energy installation, comprising the following steps
- predetermined parameters associated with the wind energy installation are selected from a control database (6) for the purpose of configuring the wind energy installation,
- a data storage medium identifier associated with the selected parameters and with the wind energy installation to be configured is stored on a mobile data storage medium (8),
- the mobile data storage medium (8) is coupled to the wind energy installation and a check is carried out in order to determine whether the data storage medium identifier matches that of the wind energy installation,
- the selected parameters are transmitted from the control database (6) to the wind energy installation using a monitoring device (11) networked to the wind energy installation and to the control database (6), and the selected parameters are implemented in the wind energy installation if the data storage medium identifier matches that of the wind energy installation.

2. Method according to claim 1,
**characterized in that**
each parameter is identified by an individual parameter key and the parameter key comprises at least one of the following items of information
- identification of the parameter,
- identification of the wind energy installation in which it is used, and
- identification of the person who last changed the implemented parameter.

3. Method according to claim 1 or 2,
**characterized in that**
the parameters comprise:
- data for controlling a generator of the wind energy installation,
- data for controlling the feeding of electrical energy from the wind energy installation into an electrical supply network,
- operation management data, and/or
- data for controlling protective functions of the wind energy installation.

4. Method according to one of the preceding claims,
**characterized in that**
a change signal is transmitted from the wind energy installation to the monitoring device (11) when at least one parameter in the wind energy installation has been changed, the change signal optionally containing information for identifying the at least one changed parameter and this information comprising:
- the date of the change,
- the time of the change, and/or
- the identification of the changed parameter.

5. Method according to claim 4,
**characterized in that**
only the changed parameters identified by the change signal are compared with the predetermined parameters associated with the wind energy installation and stored in the control database (6), or **in that** all implemented parameters are compared if the number of changed parameters exceeds a predetermined minimum number.

6. Method according to one of the preceding claims,
**characterized in that**
the parameters which have been read out are compared with the predetermined parameters associated with the wind energy installation and stored in the control database (6) parameter by parameter by reading each implemented parameter individually from the wind energy installation and comparing it with the corresponding parameter stored in the control database (6).

7. Method according to one of the preceding claims,
**characterized in that**
the selected parameters in a parameter set are combined with an identification code associated with the wind energy installation or are associated with such a code, and the identification code in particular is composed of at least
- a type code identifying the type of wind energy installation and
- an individual code identifying the specific wind energy installation.

8. Method according to claim 7,
**characterized in that**
only a few of the parameters combined in the data record are implemented when implementing the parameters in the wind energy installation.

9. Method according to one of the preceding claims,
**characterized in that**
the wind energy installation is activated only when the parameters changed or implemented in the wind energy installation have been compared with the predetermined parameters associated with the wind energy installation and stored in the control database (6).

10. Wind energy installation for generating electrical energy from wind, prepared to be configured using a method according to one of the preceding claims.

11. Wind energy installation arrangement comprising
- a wind energy installation,
- a control database (6), and
- a monitoring device (11) networked to the control database (6),
the wind energy installation being prepared to be configured by a method according to one of claims 1 to 9.

## Revendications

1. Procédé permettant de configurer une éolienne, comprenant les étapes de
- sélection de paramètres prédéterminés, associés à l'éolienne, à partir d'une base de données de commande (6) pour configurer l'éolienne,
- enregistrement d'un identifiant de support de données associé aux paramètres sélectionnés et à l'éolienne à configurer sur un support de données mobile (8),
- couplage du support de données mobile (8) avec l'éolienne et vérification que l'identifiant de support de données correspond à celui de l'éolienne,
- transmission des paramètres sélectionnés de la base de données de commande (6) à l'éolienne au moyen d'un dispositif de surveillance (11) mis en réseau avec l'éolienne et la base de données de commande (6) et mise en oeuvre des paramètres sélectionnés dans l'éolienne, lorsque l'identifiant de support de données correspond à celui de l'éolienne.

2. Procédé selon la revendication 1,
**caractérisé en ce que**
chaque paramètre est **caractérisé par** une clé de paramètre individuelle et la clé de paramètre comprend au moins une des informations
- identification du paramètre,
- identification de l'éolienne, dans laquelle il est utilisé et
- identification de la personne, qui a modifié en dernier le paramètre mis en oeuvre.

3. Procédé selon la revendication 1 ou 2, **caractérisé en ce que**
les paramètres comprennent :
- des données de commande d'un générateur de l'éolienne,
- des données de commande de l'alimentation d'énergie électrique de l'éolienne dans un réseau de distribution électrique,
- des données de gestion d'exploitation et/ou
- des données de commande de fonctions de protection de l'éolienne.

4. Procédé selon l'une quelconque des revendications précédentes,
**caractérisé en ce que**
un signal de modification est transmis de l'éolienne au dispositif de surveillance (11), lorsqu'au moins un paramètre a été modifié dans l'éolienne, dans lequel le signal de modification contient en option des informations d'identification de l'au moins un paramètre modifié et ces informations comprennent :
- la date de la modification,
- l'heure de la modification et/ou
- l'identification du paramètre modifié.

5. Procédé selon la revendication 4,
**caractérisé en ce que**
seuls les paramètres modifiés, identifiés par le signal de modification sont comparés avec les paramètres prédéterminés, associés à l'éolienne et enregistrés dans la base de données de commande (6) ou en ce que tous les paramètres mis en oeuvre sont comparés, lorsque le nombre de paramètres modifiés dépasse un nombre minimum prédéterminé.

6. Procédé selon l'une quelconque des revendications précédentes,
**caractérisé en ce que**
la comparaison des paramètres lus avec les paramètres prédéterminés, associés à l'éolienne et enregistrés dans la base de données de commande (6) se fait par paramètre, par le fait que chaque paramètre mis en oeuvre est lu individuellement dans l'éolienne et comparé avec le paramètre correspondant, enregistré dans la base de données de commande (6).

7. Procédé selon l'une quelconque des revendications précédentes,
**caractérisé en ce que**
les paramètres sélectionnés sont regroupés dans un jeu de paramètres avec un code d'identification associé à l'éolienne ou sont associés à un tel et en particulier le code d'identification se compose d'au moins
- un code de type caractérisant le type d'installation de l'éolienne et
- un code individuel caractérisant l'éolienne concrète.

8. Procédé selon la revendication 7,
**caractérisé en ce que**
lors de la mise en oeuvre des paramètres dans l'éolienne, seuls quelques-uns des paramètres regroupés dans le jeu de données sont mis en oeuvre.

9. Procédé selon l'une quelconque des revendications précédentes,
**caractérisé en ce que**
l'éolienne n'est mise en service que lorsque les paramètres modifiés ou mis en oeuvre dans l'éolienne ont été comparés avec les paramètres prédéterminés, associés à l'éolienne et enregistrés dans la base de données de commande (6).

10. Éolienne permettant de produire de l'énergie électrique à partir du vent, préparée pour être configurée au moyen d'un procédé selon l'une quelconque des revendications précédentes.

11. Ensemble éolienne comprenant :
- une éolienne,
- une base de données de commande (6) et
- un équipement de surveillance (11) mis en réseau avec la base de données de commande (6), dans lequel l'éolienne est préparée pour être configurée par un procédé selon l'une quelconque des revendications 1 à 9.
